(19) Europäisches Patentamt
European Patent Office
Office européen des brevets

(11) EP 1 543 185 B1

(12) # EUROPEAN PATENT SPECIFICATION

(45) Date of publication and mention of the grant of the patent:
**02.09.2009 Bulletin 2009/36**

(21) Application number: **03753461.7**

(22) Date of filing: **23.09.2003**

(51) Int Cl.:
***D01F 6/46*** *(2006.01)* ***D04H 3/14*** *(2006.01)*
***C08L 23/10*** *(2006.01)*

(86) International application number:
**PCT/EP2003/010707**

(87) International publication number:
**WO 2004/029342 (08.04.2004 Gazette 2004/15)**

(54) **POLYPROPYLENE FIBRES SUITABLE FOR SPUNBONDED NON-WOVEN FABRICS**

POLYPROPYLENFASERN FÜR DIE HERSTELLUNG VON THERMISCH VERFESTIGTEN SPINNVLIESEN

FIBRES DE POLYPROPYLENE CONVENANT POUR DES NON-TISSES SPUNBONDED

(84) Designated Contracting States:
**AT BE BG CH CY CZ DE DK EE ES FI FR GB GR HU IE IT LI LU MC NL PT RO SE SI SK TR**

(30) Priority: **25.09.2002 EP 02021421**
**08.10.2002 US 416992 P**

(43) Date of publication of application:
**22.06.2005 Bulletin 2005/25**

(73) Proprietor: **Basell Poliolefine Italia S.r.l.**
**20124 Milano (IT)**

(72) Inventors:
- **SARTORI, Franco**
**I-44100 Ferrara (IT)**
- **LONARDO, Angelo**
**I-80122 Napoli (IT)**
- **HERBEN, Pierre**
**B-1050 Bruxelles (BE)**

(74) Representative: **Giberti, Stefano**
**Basell Poliolefine Italia S.r.l.**
**Intellectual Property**
**P.le Privato G. Donegani 12**
**Casella Postale 19**
**44100 Ferrara (IT)**

(56) References cited:
**WO-A-00/11076**
**WO-A-00/63471**
**WO-A-96/06210**
**WO-A-03/031514**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 543 185 B1

Printed by Jouve, 75001 PARIS (FR)

## Description

The present invention relates to thermally bondable fibres comprising propylene polymer compositions, spunbonded non-woven fabrics obtained from the said fibres and polypropylene compositions for the production of the said fibres.

The definition for fibres includes spunbonding fibres and/or filaments.

Fibres formed with olefin copolymers or polyolefin compositions are already known in the art. In particular, the use of random copolymers of propylene has already been contemplated just to improve the thermal bondability (i.e. the bond strength) of fibres and/or the calendering speed.

Propylene random copolymer fibres also are typically used for non-woven fabrics to improve the non-woven softness, and good properties are generally obtained at elevated contents of the soluble fraction. However, the drawback is that elevated solvent-soluble contents substantially reduce the tenacity of the non-woven fabric.

Example of the fibres formed with olefin copolymers and polyolefin blends are described in European patent 416 620. The said polymers that have a crystallinity less than 45% provide fibres having lower tenacity and lower modulus than those formed from more crystalline propylene polymers but with improved softness and are capable of maintaining fabric characteristics.

Another example is provided in U.S. patent 4,211,819, describing heat-melt adhesive fibres obtained by spinning a crystalline poly(propylene-co-ethylene-co-1-butene). Such fibres having a lower heat-melting adhesion temperature are only used as binder material, therefore the mechanical properties are conferred by other materials. In fact, when non-woven fabrics are prepared in the examples, the said fibres are mixed with rayon fibres before calendering.

The applicant has now found that particular olefin copolymers and olefin copolymer compositions provide fibres having an improved thermal bondability associated with a good balance of mechanical properties, and non-woven fabrics having a better balance of thermal bonding characteristics and physical properties. Thus, at the same or even lower thermal bonding temperature, the non-woven fabric of the present invention exhibits improved properties such as tenacity and elongation in comparison with well-known spunbonded non-woven fabrics made up of propylene homopolymers and copolymers with similar melt flow rate (MFR).

Another advantage of the spunbonded non-woven fabrics is the improved softness. The higher softness contributes, with the soft touch, to improve the final quality of the non-woven fabric, in particular for the hygiene applications where the market appreciates very soft non-woven fabrics with clothlike appearance.

A further advantage is that by properly selecting some intrinsic properties of the propylene polymer material, non-woven fabrics with excellent properties, such as tenacity even in combination with high elongation, and low solvent-soluble contents are obtained.

Therefore the present invention provides fibres for spunbonded non-woven fabrics comprising a propylene polymer composition (A) having an MFR value (MFR (1)) from 6 to 150 g/10 min, preferably from 10 to 60, more preferably from 15 to 35, selected from the group consisting of:

i) a crystalline propylene random copolymer or a crystalline propylene polymer composition selected from:

a) a copolymer or polymer composition containing at least 0.8% by weight of ethylene and optionally one or more $C_4$-$C_{10}$ $\alpha$-olefins and having a melting temperature of 155° C or higher, a content of fraction soluble in xylene at room temperature lower than 5% by weight, a value of the ratio of the polymer fraction collected at the temperature range from 25° to 95° C by temperature rising elution fractionation (TREF) with xylene to the xylene soluble fraction at room temperature higher than 8; and

b) a copolymer or polymer composition containing more than 2.5 wt% by weight of ethylene and optionally one or more $C_4$-$C_{10}$ $\alpha$-olefins and having a melting temperature of 153° C or higher, a content of fraction soluble in xylene at room temperature lower than 10% by weight, preferably lower than 8% by weight, and a value of the ratio of the polymer fraction collected at the temperature range from 25° to 95° C by TREF with xylene to the xylene soluble fraction at room temperature higher than 4, preferably higher than 4.5; and

ii) a crystalline propylene polymer composition containing at least 0.64 wt% of ethylene and/or $C_4$-$C_{10}$ $\alpha$-olefin recurring unit and comprising (percent by weight):

I) 20-80%, preferably 30-70%, of a crystalline propylene homopolymer or crystalline propylene random copolymer containing up to 1.5%, preferably up to 0.5%, by weight of ethylene and/or $C_4$-$C_{10}$ $\alpha$-olefin; and

II) 20-80%, preferably 30-70%, of a crystalline propylene random copolymer selected from the group consisting of:

IIa) a crystalline copolymer of propylene with 0.8 to 10% by weight of ethylene; provided that the difference

in the ethylene content between polymer (I) and polymer (IIa) be at least 0.8 percentage unit, preferably 1 percentage unit, more preferably 2 percentage units, with respect to the weight of the (co)polymer concerned;
IIb) a crystalline copolymer of propylene with 1.5 to 18% by weight of a $C_4$-$C_{10}$ α-olefin and optionally ethylene; provided that the difference in the comonomer content between polymer (I) and polymer (IIb) be at least 1.5 percentage units, preferably 2 percentage units, with respect to the weight of the (co)polymer concerned; and
IIc) a mixture of copolymer (IIa) and copolymer (IIb).

In the present invention the term "copolymer" means a polymer with two or more different recurring units, such as bipolymer and terpolymer.
In the present disclosure room temperature refers to a temperature of about 25° C.
The above crystalline polymers exhibit a stereoregularity of the isotactic type.
When ethylene is present as the sole comonomer in component (i)(a), the said component approximately exhibits an ethylene content from 0.8 to 3% by weight with respect to the weight of the whole component.
When ethylene is present as the sole comonomer in component (i)(b), the said component approximately exhibits an ethylene content up to 5% by weight.
When $C_4$-$C_{10}$ α-olefins also are present in component (i), they are generally within 1 and 6% by weight with respect to the weight of the whole component (i).
Preferably, composition (ii) of said polymer composition (A) exhibits the following features:

1) a melting temperature of 153° C or higher; and
2) a content of fraction soluble in xylene at room temperature lower than 10%, preferably lower than 9% by weight.

When ethylene also is present as the comonomer in random copolymer (ii)(IIb), the ethylene content is generally within 1% by weight with respect to the weight of the said copolymer.
In a preferred embodiment said polymer composition (ii) comprises (percent by weight):

I) 20-80%, preferably 30-70%, of a crystalline propylene homopolymer and/or crystalline propylene random copolymer containing up to 1.5%, preferably up to 0.5%, of ethylene and/or $C_4$-$C_{10}$ α-olefin; and
II) 20-80%, preferably 30-70%, of a crystalline random copolymer selected from:

IIa) a copolymer of propylene with 0.8 to 5% of ethylene; provided that the difference in the ethylene content between polymer (I) and polymer (IIa) be at least 0.8 percentage unit with respect to the weight of the (co) polymer concerned;
IIb) a copolymer of propylene with 1.5 to 12% of a $C_4$-$C_{10}$ α-olefin and optionally ethylene; provided that the difference in the comonomer content between polymer (I) and polymer (IIb) be at least 1.5 percentage units with respect to the weight of the (co)polymer concerned; and
IIc) a mixture of copolymer (IIa) and copolymer (IIb).

Said composition (ii) has preferably a melting temperature of 155° C or higher, a content of fraction soluble in xylene at room temperature lower than 5% by weight and a value of the ratio of the polymer fraction collected at the temperature range from 25° to 95° C by TREF with xylene to the xylene soluble fraction at room temperature, higher than 8.
The MFR values of the two propylene polymers constituting polymer composition (ii) can be similar or different.
Particularly preferred is a crystalline propylene polymer composition (ii) wherein component (I) is a propylene homopolymer and component (II) is an ethylene-propylene random copolymer.
Spun-bonded non-woven fabrics having particularly high values of both tenacity and elongation at break are typically obtained from fibres prepared with compositions (A) having an MFR (1) value from 10 to 40 g/10 min, preferably 20 to 40 g/10 min. Preferably, said composition (A) exhibits a polydispersity index value typically from 3 to 6, more preferably 3.5 to 6. The spun-bonded non-woven fabrics produced with fibres comprising said compositions (A) have typically a tenacity value of 90 N/5cm measured in machine direction and of 60 N/5cm measured in cross direction. The elongation at break is typically at least 90%, preferably 100%, measured in both the directions.
The fibre according to the present invention has typically a value of tenacity higher than 22 cN/tex, preferably higher than 23 cN/tex, with standard throughput.
The elongation at break shown by the fibres of the present invention is typically higher than 140%, preferably at least 150%, with standard throughput.
The fibre according to the present invention has typically a titre ranging from 0.8 and 8 dtex.
Suitable fibres for spunbonded fabric are prepared also with said polypropylene composition (A) obtainable by subjecting to chemical degradation a precursor polymer composition (B) having an MFR value (MFR (2)) of from 0.5 to

50 g/10 min, provided that the ratio of MFR (1) to MFR (2) be from 1.5 to 60, preferably 6 to 30.

The chemical degradation of the polymer chains of precursor polymer (B) is carried out by using appropriate and well-known techniques.

One of said techniques is based on the use of peroxides which are added in an extruder to the polymeric material in a quantity that allows to obtain the desired degree of chemical degradation. Such degradation is achieved by bringing the polymeric material at a temperature at least equal to the decomposition temperature of the peroxides and mechanical shear stress conditions.

The peroxides that are most conveniently employable for the chemical degradation have a decomposition temperature preferably ranging from 150° to 250° C. Examples of said peroxides are the di-tert-butyl peroxide, the dicumyl peroxide, the 2,5-dimethyl-2,5-di (tert-butylperoxy)hexyne, and the 2,5-dimethyl-2,5-di (tert-butyl peroxy)hexane, which is marketed under the Luperox™ 101 trade name.

Preferably, said chemical degraded composition (A) has a polydispersity index value from 2 to 6, more preferably from 2 to 3.

The $C_4$-$C_{10}$ $\alpha$-olefins that may be present as comonomers in the said propylene copolymers or polymer compositions are represented by the formula $CH_2$=CHR, wherein R is an alkyl radical, linear or branched, with 2-8 carbon atoms or an aryl (in particular phenyl) radical. Examples of said $C_4$-$C_{10}$ $\alpha$-olefins are 1-butene, 1-pentene, 1-hexene, 4-methyl-1-pentene and 1-octene. Particularly preferred is 1-butene.

A further embodiment of the present invention is a chemically degraded propylene polymer composition (A) having an MFR (1) value from 6 to 150 g/10 min, preferably from 10 to 60, more preferably from 15 to 35, and being selected from:

i) a crystalline propylene random copolymer or a crystalline propylene polymer composition selected from:

a) a copolymer or polymer composition containing at least 0.8% by weight of ethylene and optionally one or more $C_4$-$C_{10}$ $\alpha$-olefins and having a melting temperature of 155° C or higher, a content of fraction soluble in xylene at room temperature lower than 5% by weight, a value of the ratio of the polymer fraction collected at the temperature range from 25° to 95° C by TREF with xylene to the xylene soluble fraction at room temperature, higher than 8; and

b) a copolymer or polymer composition containing more than 2.5 wt% by weight of ethylene and optionally one or more $C_4$-$C_{10}$ $\alpha$-olefins and having a melting temperature of 153° C or higher, a content of fraction soluble in xylene at room temperature lower than 10% by weight, preferably lower than 8% by weight, and a value of the ratio of the polymer fraction collected at the temperature range from 25° to 95° C by TREF with xylene to the xylene soluble fraction at room temperature, higher than 4, preferably higher than 4.5; and

ii) a crystalline propylene polymer composition containing at least 0.64 wt% of ethylene and/or $C_4$-$C_{10}$ $\alpha$-olefin recurring unit and consisting of (percent by weight):

I) 20-80%, preferably from 30-70%, of a crystalline propylene homopolymer or crystalline propylene random copolymer containing up to 1.5%, preferably up to 0.5%, by weight of ethylene and/or $C_4$-$C_{10}$ $\alpha$-olefin; and

II) 20-80%, preferably from 30-70%, of a crystalline propylene random copolymer selected from:

IIa) a copolymer of propylene with 0.8 to 5% of ethylene; provided that the difference in the ethylene content between polymer (I) and polymer (IIa) be at least 0.8 percentage unit, preferably 1 percentage unit, more preferably 2 percentage units, with respect to the weight of the (co)polymer concerned;

IIb) a copolymer of propylene with 1.5 to 12% of a $C_4$-$C_{10}$ $\alpha$-olefin and optionally ethylene; provided that the difference in the comonomer content between polymer (I) and polymer (IIb) be at least 1.5 percentage units, preferably 2 percentage units, with respect to the weight of the (co)polymer concerned; and

IIc) a mixture of copolymer (IIa) and copolymer (IIb).

Said polymer composition is obtainable by subjecting to chemical degradation a precursor polymer composition (B) having an MFR (2) value of from 0.5 to 50 g/10 min, provided that the ratio of MFR (1) to MFR (2) be from 1.5 to 60, preferably from 6 to 30.

Said polymer composition (A) has preferably the following features:

1) a melting temperature of 155° C or higher;

2) a content of fraction soluble in xylene at room temperature lower than 4%, preferably lower than 3%, more preferably lower than 2.5%, by weight; and

3) a value of the ratio of the polymer fraction collected at the temperature range from 25° to 95° C by TREF with

xylene to the xylene soluble fraction at room temperature,

higher than 8, preferably higher than 10, more preferably higher than 12, by weight.

Preferably, said composition (A) has a polydispersity index value from 2.0 to 4.5, more preferably from 2.0 to 3.0.

Propylene polymer composition (A) can be prepared with a process comprising the following stages:

1) preparing previously said precursor composition (B) by polymerising the monomers in one or more sequential stages, operating in each stage in the presence of the polymer formed and the catalyst used in the preceding stage, and dosing the molecular weight regulator (preferably hydrogen) in such amounts as to obtain an MFR (2) value for the precursor composition of from 0.5 to 50 g/10 min; and

2) subjecting precursor composition (B) obtained in stage (1) to a degradation treatment in order to obtain said MFR (1) values for the final composition from 6 to 150 g/10 min, more preferably from 10 to 60 g/10 min, with a degradation ratio, in terms of ratio of MFR (1) to MFR (2), from 1.5 to 60, preferably from 6 to 30.

Precursor composition (B) is subjected to chemical degradation of the polymer chains according to processes well-known in the art. For example, the degradation process is carried out by means of free radical initiators, such as peroxides. Examples of peroxides that can be used for the said purpose are the 2,5-dimethyl.2,5-di(tert-butylperoxide) hexane and dicumyl-peroxide. The degradation is carried out by using appropriate amounts of free radical initiators, and preferably takes place in an inert atmosphere, such as nitrogen. Methods, apparatus and operating conditions known in the art can be used to carry out such process.

From the description above it should be clear that in the precursor composition (B) the comonomer contents and relative amounts are the same as in the final composition (A) (after degradation). The degradation treatment has the effect of increasing the MFR values of the composition from MFR (2) to MFR (1), with the said values of the ratio of MFR (1) to MFR (2) from 1.5 to 60, preferably from 6 to 30.

The compositions of the present invention can be prepared by polymerisation in one or more polymerisation steps. Such polymerisation is carried out in the presence of stereospecific Ziegler-Natta catalysts. An essential component of said catalysts is a solid catalyst component comprising a titanium compound having at least one titanium-halogen bond, and an electron-donor compound, both supported on a magnesium halide in active form. Another essential component (co-catalyst) is an organoaluminum compound, such as an aluminum alkyl compound.

An external donor is optionally added.

The catalysts generally used in the process of the invention are capable of producing polypropylene with an isotacticity index (determined as fraction insoluble in xylene at 25° C as disclosed hereinbelow) greater than 90%, preferably greater than 95%.

Catalysts having the above mentioned characteristics are well known in the patent literature; particularly advantageous are the catalysts described in US patent 4,399,054 and European patent 45977. Other examples can be found in US patent 4,472,524.

The solid catalyst components used in said catalysts comprise, as electron-donors (internal donors), compounds selected from the group consisting of ethers, ketones, lactones, succinates, compounds containing N, P and/or S atoms, and esters of mono- and dicarboxylic acids.

Particularly suitable electron-donor compounds are non-extractable succinates; particularly preferred are the succinates of formula (I) below

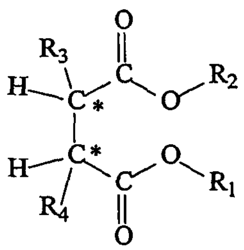

(I)

in which the radicals $R_1$ and $R_2$, equal to, or different from, each other are a $C_1$-$C_{20}$ linear or branched alkyl, alkenyl, cycloalkyl, aryl, arylalkyl or alkylaryl group, optionally containing heteroatoms; and the radicals $R_3$ and $R_4$ equal to, or different from, each other, are $C_1$-$C_{20}$ alkyl, cycloalkyl, aryl, arylalkyl or alkylaryl group, optionally containing heteroatoms with the proviso that at least one of them is a branched alkyl; said compounds being, with respect to the two asymmetric carbon atoms identified in the structure of formula (I), stereoisomers of the type (S,R) or (R,S) that are present in pure forms or in mixtures.

$R_1$ and $R_2$ are preferably $C_1$-$C_8$ alkyl, cycloalkyl, aryl, arylalkyl and alkylaryl groups.

Particularly preferred are the compounds in which $R_1$ and $R_2$ are selected from primary alkyls and in particular branched primary alkyls. Examples of suitable $R_1$ and $R_2$ groups are methyl, ethyl, n-propyl, n-butyl, isobutyl, neopentyl, 2-ethylhexyl. Particularly preferred are ethyl, isobutyl, and neopentyl.

Particularly preferred are the compounds in which the $R_3$ and/or $R_4$ radicals are secondary alkyls like isopropyl, sec-butyl, 2-pentyl, 3-pentyl or cycloakyls like cyclohexyl, cyclopentyl, cyclohexylmethyl.

Examples of the above-mentioned compounds are the (S,R) (S,R) forms pure or in mixture, optionally in racemic form, of diethyl 2,3-bis(trimethylsilyl)succinate, diethyl 2,3-bis(2-ethylbutyl)succinate, diethyl 2,3-dibenzylsuccinate, diethyl 2,3-diisopropylsuccinate, diisobutyl 2,3-diisopropylsuccinate, diethyl 2,3-bis(cyclohexylmethyl)succinate, diethyl 2,3-diisobutylsuccinate, diethyl 2,3-dineopentylsuccinate, diethyl 2,3-dicyclopentylsuccinate, diethyl 2,3-dicyclohexylsuccinate.

Other suitable electron-donor compounds are 1,3-diethers of formula:

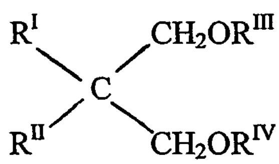

wherein $R^1$ and $R^{II}$ are the same or different and are $C_1$-$C_{18}$ alkyl, $C_3$-$C_{18}$ cycloalkyl or $C_7$-$C_{18}$ aryl radicals; $R^{III}$ and $R^{IV}$ are the same or different and are $C_1$-$C_4$ alkyl radicals; or are the 1,3-diethers in which the carbon atom in position 2 belongs to a cyclic or polycyclic structure made up of 5, 6, or 7 carbon atoms, or of 5-n or 6-n' carbon atoms, and respectively n nitrogen atoms and n' heteroatoms selected from the group consisting of N, O, S and Si, where n is 1 or 2 and n' is 1, 2, or 3, said structure containing two or three unsaturations (cyclopolyenic structure), and optionally being condensed with other cyclic structures, or substituted with one or more substituents selected from the group consisting of linear or branched alkyl radicals; cycloalkyl, aryl, aralkyl, alkaryl radicals and halogens, or being condensed with other cyclic structures and substituted with one or more of the above mentioned substituents that can also be bonded to the condensed cyclic structures; one or more of the above mentioned alkyl, cycloalkyl, aryl, aralkyl, or alkaryl radicals and the condensed cyclic structures optionally containing one or more heteroatoms as substitutes for carbon or hydrogen atoms, or both.

Ethers of this type are described in published European patent applications 361493 and 728769.

Representative examples of said dieters are 2-methyl-2-isopropyl-1,3-dimethoxypropane, 2,2-diisobutyl-1,3-dimethoxypropane, 2-isopropyl-2-cyclopentyl-1,3-dimethoxypropane, 2-isopropyl-2-isoamyl-1,3-dimethoxypropane, 9,9-bis (methoxymethyl) fluorene.

Other suitable electron-donor compounds are phthalic acid esters, such as diisobutyl, dioctyl, diphenyl and benzylbutyl phthalate.

The preparation of the above mentioned catalyst components is carried out according to various methods.

For example, an $MgCl_2$-nROH adduct (in particular in the form of spheroidal particles) wherein n is generally from 1 to 3 and ROH is ethanol, butanol or isobutanol, is reacted with an excess of $TiCl_4$ containing the electron-donor compound. The reaction temperature is generally from 80° to 120° C. The solid is then isolated and reacted once more with $TiCl_4$, in the presence or absence of the electron-donor compound, after which it is separated and washed with aliquots of a hydrocarbon until all chlorine ions have disappeared.

In the solid catalyst component the titanium compound, expressed as Ti, is generally present in an amount from 0.5 to 10% by weight. The quantity of electron-donor compound which remains fixed on the solid catalyst component generally is 5 to 20% by moles with respect to the magnesium dihalide.

The titanium compounds which can be used for the preparation of the solid catalyst component are the halides and the halogen alcoholates of titanium. Titanium tetrachloride is the preferred compound.

The reactions described above result in the formation of a magnesium halide in active form. Other reactions are known in the literature, which cause the formation of magnesium halide in active form starting from magnesium compounds other than halides, such as magnesium carboxylates.

The active form of magnesium halide in the solid catalyst component can be recognized by the fact that in the X-ray spectrum of the catalyst component the maximum intensity reflection appearing in the spectrum of the nonactivated magnesium halide (having a surface area smaller than 3 $m^2/g$) is no longer present, but in its place there is a halo with the maximum intensity shifted with respect to the position of the maximum intensity reflection of the nonactivated magnesium dihalide, or by the fact that the maximum intensity reflection shows a width at half-peak at least 30% greater than the one of the maximum intensity reflection which appears in the spectrum of the nonactivated magnesium halide. The most active forms are those where the above mentioned halo appears in the X-ray spectrum of the solid catalyst

component.

Among magnesium halides, the magnesium chloride is preferred. In the case of the most active forms of magnesium chloride, the X-ray spectrum of the solid catalyst component shows a halo instead of the reflection which in the spectrum of the nonactivated chloride appears at 2.56 Å.

The Al-alkyl compounds used as co-catalysts comprise the Al-trialkyls, such as Al-triethyl,

Al-triisobutyl, Al-tri-n-butyl, and linear or cyclic Al-alkyl compounds containing two or more Al atoms bonded to each other by way of O or N atoms, or $SO_4$ or $SO_3$ groups.

The Al-alkyl compound is generally used in such a quantity that the Al/Ti ratio be from 1 to 1000.

The electron-donor compounds that can be used as external donors include aromatic acid esters such as alkyl benzoates, and in particular silicon compounds containing at least one Si-OR bond, where R is a hydrocarbon radical.

Examples of silicon compounds are (tert-butyl)$_2$Si(OCH$_3$)$_2$, (cyclohexyl)(methyl)Si (OCH$_3$)$_2$, (phenyl)$_2$Si (OCH$_3$)$_2$ and (cyclopentyl)$_2$Si(OCH$_3$)$_2$. 1,3-diethers having the formulae described above can also be used advantageously. If the internal donor is one of these dieters, the external donors can be omitted.

In particular, even if many other combinations of the previously said catalyst components may allow to obtain polymers and polymer compositions having the previously said features 1) and 2), the random copolymers are preferably prepared by using catalysts containing a phthalate as inside donor and (cyclopentyl)$_2$Si(OCH$_3$)$_2$ as external donor, or the said 1,3-diethers as inside donors and (cyclopentyl)$_2$Si(OCH$_3$)$_2$ as external donor.

As previously said, the polymerisation process can be carried out in one or more steps. In the case of composition (ii), it can be carried out in at least two sequential steps, wherein the first propylene (co)polymer and the second propylene random copolymer are prepared in separate subsequent steps, operating in each step, except the first step, in the presence of the polymer formed and the catalyst used in the preceding step. Clearly, when composition (ii) contains additional (co)polymers, it becomes necessary to add further polymerisation steps to produce them. The said polymerisation steps can be carried out in separate reactors, or in one or more reactors where gradients of monomer concentrations and polymerisation conditions are generated. The catalyst is generally added only in the first step, however its activity is such that it is still active for all the subsequent step(s).

The regulation of the molecular weight is carried out by using known regulators, hydrogen in particular.

By properly dosing the concentration of the molecular weight regulator in the relevant steps, the previously described MFR (2) values are obtained.

The whole polymerisation process, which can be continuous or batch, is carried out following known techniques and operating in liquid phase, in the presence or not of inert diluent, or in gas phase, or by mixed liquid-gas techniques.

Reaction time, pressure and temperature relative to the two steps are not critical, however it is best if the temperature is from 20° to 100° C. The pressure can be atmospheric or higher.

The catalysts can be pre-contacted with small amounts of olefins (prepolymerisation).

It is also possible to employ a process for the catalytic polymerisation in the gas-phase carried out in at least two interconnected polymerisation zones, the process comprising feeding one or more monomers to said polymerisation zones in the presence of catalyst under reaction conditions and collecting the polymer product from said polymerisation zones, in which process the growing polymer particles flow upward through one of said polymerisation zones (riser) under fast fluidisation conditions, leave said riser and enter another polymerisation zone (downcomer) through which they flow downward under the action of gravity, leave said downcomer and are reintroduced into the riser, thus establishing a circulation of polymer between the riser and the downcomer, the process being optionally characterised in that:

- means are provided which are capable of totally or partially preventing the gas mixture present in the riser from entering the downcomer, and
- a gas and/or liquid mixture having a composition different from the gas mixture present in the riser is introduced into the downcomer.

Such polymerisation process is illustrated in WO 00/02929.

According to a particularly advantageous embodiment of this process, the introduction into the downcomer of the said gas and/or liquid mixture having a composition different from the gas mixture present in the riser is effective in preventing the latter mixture from entering the downcomer.

The propylene polymer composition (A) used for fibres and non-woven fabrics of the present invention can also contain additives commonly employed in the art, such as antioxidants, light stabilizers, heat stabilizers, antistatic agents, flame retardants, fillers, nucleating agents, pigments, anti-soiling agents, photosensitizers.

As said above an embodiment of the present invention is a non-woven fabric. It has typically a weight bellow 200 g/m$^2$.

The fabric of the present invention can be prepared with the well-known processes for the preparation of spunbond non-woven fabrics, with which the fibres are spread to form directly a fibre web and calendered to obtain the non-woven fabric.

In a typical spunbonding process, the polymer is heated in an extruder to the melting point of the polymer or polymer composition and then the molten polymer is pumped under pressure through a spinneret containing a number of orifices of desired diameter, thereby producing filaments of the molten polymer and without subjecting the filaments to a subsequent drawing.

The equipment is characterised by the fact that it includes an extruder with a die on its spinning head, a cooling tower an air suction gathering device that uses Venturi tubes. Underneath this device that uses air speed to control the take up speed the filaments are usually gathered over a conveyor belt, where they are distributed forming a web for thermal bonding in a calender.

When using typical spunbonding machinery, it is usually convenient to apply the following process conditions:

- the output per hole ranges from 0.1 to 2 g/min, preferably from 0.2 to 1 g/min;
- the molten polymer filaments fed from the face of the spinneret are generally cooled by means of an air flow and are solidified as a result of cooling;
- the spinning temperature is generally between 200° and 300° C, preferably between 220° and 250° C.

The fabric can be constituted by monolayer or multilayer non-wovens.

In a preferred embodiment, the non-woven fabric is multilayered and at least one layer and at least one layer comprises fibres formed from said propylene polymer composition (A). The other layer may be obtained by spinning processes other than spunbonding and may comprise other types of polymers.

Typically, the spun-bonded non-woven fabric made up of fibres comprising chemically degraded composition (A) according to the present invention has a tenacity of at least 30 N measured in the machine direction (MD) and of at least 7.7 N measured in cross direction (CD) and an elongation at break of at least 38% measured in machine direction and of at least 58% measured in cross direction.

The non-woven fabric of the present invention with improved tenacity, softness and elongation at break is useful in a number of applications. For example, the non-woven fabric can be converted into coverstock and diapers.

The following examples are given to illustrate and not to limit the present invention.

The data relating to the polymeric materials and the fibres of the description and examples are determined by way of the methods reported below.

- <u>MFR:</u> ISO method 1133 (230° C, 2.16 kg).
- <u>Melting and crystallization temperature:</u> by DSC with a temperature variation of 20° C per minute.
- <u>Ethylene content:</u> by IR spectroscopy.
- <u>Polydispersity Index (PI):</u> measurement of molecular weight distribution of the polymer. To determine the PI value, the modulus separation at low modulus value, e.g. 500 Pa, is determined at a temperature of 200° C by using a RMS-800 parallel plates rheometer model marketed by Rheometrics (USA), operating at an oscillation frequency which increases from 0.01 rad/second to 100 rad/second. From the modulus separation value, the PI can be derived using the following equation:

$$PI = 54.6 \times (\text{modulus separation})^{-1.76}$$

wherein the modulus separation (MS) is defined as:
MS = (frequency at G' = 500 Pa)/(frequency at G" = 500 Pa)
wherein G' is the storage modulus and G" is the low modulus.

- <u>Fractions soluble and insoluble in xylene at 25° C:</u> 2.5 g of polymer are dissolved in 250 ml of xylene at 135° C under agitation. After 20 minutes the solution is allowed to cool to 25° C, still under agitation, and then allowed to settle for 30 minutes. The precipitate is filtered with filter paper, the solution evaporated in nitrogen flow, and the residue dried under vacuum at 80° C until constant weight is reached. Thus one calculates the percent by weight of polymer soluble and insoluble at room temperature.
- <u>Temperature rising elution fractionation with xylene</u>: About 1 g of sample is dissolved in 200 ml of o-xylene, stabilized with 0.1 g/l of Iragnox® 1010 (pentaerytrityl tetrakis 3-(3,5-di-tert-butyl-4-hydroxyphenyl)propanoate). The dissolution temperature is in the range of 125°-135° C. The resulting solution is poured off into a column packed with glass beads and subsequently cooled down slowly in 16.5 h to 25° C.
  The first fraction is obtained at room temperature eluting with o-xylene. The second fraction is collected after having raised the column temperature up to 95° C. The polymer component soluble between 25° and 95° C is collected as a single fraction.

The successive fractions are eluted with o-xylene while the temperature is raised linearly between 95° to 125° C. Each fraction, recovered as a 200 ml solution, is collected at 1° C temperature increments. The polymer fractions are subsequently precipitated with acetone, filtered on a 0.5 μm PTFE filter, dried under vacuum at 70° C and weighted.

- Titre of filaments: from a 10 cm long roving, 50 fibres are randomly chosen and weighed. The total weight of the said 50 fibres, expressed in mg, is multiplied by 2, thereby obtaining the titre in dtex.
- Tenacity and Elongation (at break) of filaments: from a 500 m roving a 100 mm long segment is cut. From this segment the single fibres to be tested are randomly chosen. Each single fibre to be tested is fixed to the clamps of an Instron dinamometer (model 1122) and tensioned to break with a traction speed of 20 mm/min for elongations lower than 100% and 50 mm/min for elongations greater than 100%, the initial distance between the clamps being of 20 mm. The ultimate strength (load at break) and the elongation at break are determined.
  The tenacity is derived using the following equation:

$$\text{Tenacity} = \text{Ultimate strength (cN)} \times 10/\text{Titre (dtex)}.$$

- Bonding Force: when non-woven samples are prepared, the bond strength is determined on 20 cm long and 5 cm wide specimens. The 5 cm wide extremities are fixed to the clamps of the dynamometer and tensioned at a clamp speed of 100 mm/min (the initial distance between the clamps being of 10 cm). The maximum force measured in the machine direction and in the cross direction, with respect to the calendering step, represents the strength of the fibres.

Examples 1 and 2

The polymers are prepared by polymerising propylene and ethylene under continuous conditions in a plant comprising a gas phase polymerisation apparatus.

The catalyst employed comprises a catalyst component prepared by analogy with example 5 of EP A 728 769, but using microspheroidal $MgCl_2 \cdot 1.7\ C_2H_5OH$ instead of $MgCl_2 \cdot 2.1\ C_2H_5OH$.

Catalyst system and prepolymerisation treatment

Before introducing the catalyst component into the polymerisation reactors, the solid catalyst component described above is contacted at 12° C for 24 minutes with triethylaluminium (TEAL) and dicyclopentyldimethoxysilane (DCPMS) in such quantity that the weight ratio of TEAL to the solid catalyst component be equal to 5 and the weight ratio of TEAL to DCPMS is 4.

The catalyst system is then subjected to prepolymerisation by maintaining it in suspension in liquid propylene at 20° C for about 5 minutes before introducing it into the first polymerisation reactor.

Polymerisation

The polymerisation run is conducted in continuous mode in a series of two reactors equipped with devices to transfer the product from one reactor to the one immediately next to it. The two reactors are liquid phase reactors. Polymer (I) is prepared in the first reactor, while polymer (II) is prepared in the second one.

Hydrogen is used as molecular weight regulator.

The gas phase (propylene, ethylene and hydrogen) is continuously analysed via gas-chromatography.

At the end of the run the powder is discharged and dried under a nitrogen flow. The main polymerisation conditions and the analytical data relating to the polymers produced in the two reactors are reported in Table 1.

The polymer composition thus obtained is subjected to extrusion/granulation in a twin screw extruder (L/D= 35) in the presence of about 0.05% by weight of Luperox™ 101 (i.e. 2,5-dimethyl-2,5-di(t-butylperoxo)hexane, 0.05% by weight of calcium stearate and 0.15% by weight of Irganox® B215 (i.e. 50 wt% of pentaerithryl-tetrakis[3(3,5-di-tert-butyl-4-hydroxyphenyl] propionate and 50 wt% of bis(2,4-di-tert-butylphenyl)phosphite)) marketed by Ciba® Speciality Chemicals. The operative conditions are as follows: head temperature of 250° C, melt temperature of 239° C and output of 21 kg/hour.

The properties of the polymer compositions after chemical degradation are reported in Table 1.

Comparative Examples 1 and 2 (1c and 2c)

Commercial crystalline propylene homopolymers for spunbonding processing having the features reported in Table 1 are subjected to chemical degradation at the same conditions and with the same agents as employed in examples 1 and 2. The main properties of the degraded homopolymers are reported in Table 1.

Table 1

| Example | 1c | 2c | 1 | 2 |
|---|---|---|---|---|
| 1st Reactor - Propylene homopolymer | | | | |
| Temperature, ° C | - | - | 85 | 85 |
| Split, wt% | - | - | 50 | 50 |
| 2nd Reactor - Poly(propylene-*co*-ethylene) | | | | |
| Temperature, ° C | - | - | 85 | 85 |
| Split, wt% | - | - | 50 | 50 |
| Properties of precursor polymer composition | | | | |
| MFR, g/10 min | 1.7 | 1.7 | 2.3 | 2.4 |
| Polydispersity index | 3.6 | 3.6 | 3.7 | 3.7 |
| Xylene-soluble fraction, wt% . | 4.0 | 4.0 | 2.2 | 2.0 |
| Ethylene content, wt% | 0 | 0 | 1.3 | 1.4 |
| Melting temperature, ° C | 163 | 163 | 158 | 158 |
| Xylene-soluble fraction at the 25°-95°C Temperature, wt% | 11.8 | 11.8 | 32.7 | 29.1 |
| Properties of the polymer composition after chemical degradation | | | | |
| MFR, g/10 min | 25 | 28 | 25 | 27 |
| Xylene-soluble fraction, wt% | 4 | 4.0 | 2.2 | 2.0 |
| Polydispersity index | 2.4 | 2.4 | 2.4 | 2.6 |
| Xylene-Soluble Fraction at the 25°-95° C Temperature, wt% | 13.9 | - | 33.3 | 33.3 |
| TREF 25°-95° C/xylene-soluble fraction ratio | 3.5 | - | 15.1 | 16.6 |
| Note: Split = amount of polymer produced. | | | | |

Examples 3 and 4 and Comparative Example 3 (3c)

The polymer compositions of examples 1 and 2 and the homopolymer of comparative example 1 are spun in a Leonard 25 spinning pilot line with length/diameter ratio of the screw of 25, screw diameter of 25 mm and compression ratio of 1:3. The line is marketed by Costruzioni Meccaniche Leonard-Sumirago (VA)).

The spinning characteristics and the properties of the filaments thus produced are reported in Table 2.

Table 2

| Example | 3c | 3 | 4 |
|---|---|---|---|
| Operative conditions | | | |
| Hole diameter, mm | 0,6 | 0.6 | 0.6 |
| Output per hole, g/min | 0.6 | 0.6 | 0.6 |
| Hole number in the die | 37 | 37 | 37 |
| Die temperature, °C | 250 | 250 | 250 |
| Melting temperature, °C | 258 | 258 | 258 |

(continued)

| Example | 3c | 3 | 4 |
|---|---|---|---|
| Operative conditions | | | |
| Take up speed, m/min | 2700 | 2700 | 2700 |
| Properties of the filaments | | | |
| Titre, dtex | 2.25 | 2.3 | 2.35 |
| Tenacity, cN/tex | 21.1 | 26.8 | 24.6 |
| Elongation at break, % | 220 | 160 | 235 |

With respect to the filament of comparative example 3, the filaments according to the present invention show increased tenacity. The capability to produce filaments of higher tensile strength can be used advantageously for the production of spunbond non-woven fabrics.

Example 5 and Comparative Example 4 (4c)

The polymer composition of example 1 and the homopolymer of comparative example 1 are processed in a spunbond line. The trials are conducted at full line capacity.
The non-woven fabrics thus produced have a weight of 15 g/m$^2$.

Example 6

Example 5 is repeated excepted that the calender temperature is decreased by 5° C.

Example 7

Example 6 is repeated except that the filaments are processed under more severe conditions by increasing the pressure drag air.
The operative conditions and the properties of the non-woven fabrics obtained in examples 5 to 7 and comparative example 4 are reported in Table 3.

Table 3

| Example | 4c | 5 | 6 | 7 |
|---|---|---|---|---|
| Operative conditions | | | | |
| Temperature of the polymer melted in the filter, °C | 225 | 225 | 225 | 225 |
| Air jet pressure, mbar | 120 | 120 | 120 | 135 |
| Output per hole, g/min | 0.6 | 0.6 | 0.6 | 0.6 |
| Temperature of the smooth calender, °C | 168 | 168 | 163 | 163 |
| Temperature of the embossed calender, °C | 170 | 170 | 165 | 165 |
| Properties of the filament and of the non-woven fabric | | | | |
| Filament titre, dtex | 2.9 | 3.0 | 2.9 | 2.8 |
| Fabric weight, g/m$^2$ | 15 | 15 | 15 | 15 |
| MD tenacity, N | 26.1 | 33.2 | 31.8 | 34.3 |
| CD tenacity, N | 7.6 | 8.9 | 7.9 | 8.2 |
| MD elongation at break, % | 35 | 40 | 40 | 45 |
| CD elongation at break, % | 55 | 65 | 60 | 65 |

(continued)

| Properties of the filament and of the non-woven fabric | | | | |
|---|---|---|---|---|
| Softness[1)] | 3 | 4 | 5 | 5 |
| 1) Softness ranking: 1=bad; 2=lower than reference; 3= equal to reference; 4= better than reference; 5= Very good | | | | |

The above data show that the filaments of example 3 exhibit good processability, high consistency and no breakage under all tested conditions. The thus produced non-woven fabrics according to the present invention show higher softness and higher fabric tenacity than the comparative non-woven fabric.

Example 8 and Comparative Example 5 (5c)

The polymer composition of example 2 and the homopolymer of comparative example 2 are tested in a spunbond line in the same conditions.

The main conditions of the extruder, spinning and calendering are reported in Table 4.

Example 9

The polymer composition of example 2 is spun at higher stretching air and lower calendering temperature than in example 8.

Table 4

| Example | 5c | 8 | 9 |
|---|---|---|---|
| Temperature of the polymer melted in the filter, °C | 240 | 240 | 240 |
| Output per hole, g/min | 0.39 | 0.39 | 0.39 |
| Hole diameter, mm | 0.45 | 0.45 | 0.45 |
| Air jet pressure, mPa | 15.19 | 15.19 | 16.17 |
| Calendering temperature of the smooth roll, °C | 139 | 139 | 134 |
| Calendering temperature of the embossed roll, °C | 139 | 139 | 134 |
| Properties of the filament and of the non-woven fabric | | | |
| Filament titre, dtex | 1.8 | 1.8 | 1.6 |
| Non-woven weight, g/m$^2$ | 16.3 | 16 | 16.5 |
| MD tenacity, N/5cm . | 33.2 | 33.5 | 35.4 |
| MD elongation at break, % | 40 | 45 | 45 |
| CD tenacity, N/5cm | 27.3 | 27.9 | 30.1 |
| CD elongation at break, % | 35 | 45 | 45 |

The data in Table 4 show that the non-woven fabrics according to the present invention has an increase of elongation at break and equivalent or even better tenacity in comparison with the comparative non-woven fabric. In particular, the non-woven fabric of example 9 shows higher tenacity in both MD and CD, still maintaining good values of the elongation at break in both MD and CD, than the non-woven fabric of example 8.

Example 10

The polymer composition is prepared and extruded as in example 1 except that no peroxide is added during the extrusion.

The polymerisation conditions and the main features of the polymer are reported in Table 5.

Comparative Example 6 (6c)

Conventional propylene homopolymers for spunbonding processing having the features reported in Table 5 are subjected to chemical degradation just as in example 1, amounts and types of peroxide and additives being the same as in example 1. The main properties of the precursor and of the granulated polymers are reported in Table 5.

Table 5

| Example | 6c | 10 |
|---|---|---|
| 1st Reactor - Propylene homopolymer | | |
| Temperature, ° C | 75 | 80 |
| Split, wt% | 50 | 50 |
| 2nd Reactor - Propylene-ethylene copolymer | | |
| Temperature, ° C | 75 | 80 |
| Split, wt% | 50 | 50 |
| Properties of precursor polymer composition | | |
| MFR "L", g/10 min | 1.7 | 36.3 |
| Polydispersity index | 3.6 | 3.35 |
| Xylene-soluble fraction, wt%. | 4.0 | 3.6 |
| Ethylene content, wt% | 0 | 1.2 |
| Soluble fraction at the 25°-95° C temperature, wt% | 12.3 | 32.8 |
| Properties of the polymer composition after granulation | | |
| MFR "L", g/10 min | 32 | 36.4 |
| Polydispersity index | 2.6 | 3.3 |
| Melting temperature, °C | 163 | 156.8 |
| Xylene-soluble fraction, wit% | 4.1 | 3.6 |
| Xylene-soluble fraction at the 25°-95° C temperature, wt% | 13.9 | 32.8 |
| TREF 25°-95° C/Xylene-soluble fraction ratio | 3.5 | 9.1 |
| Note: Split = amount of polymer produced. | | |

Example 11 and Comparative Example 7 (7c)

The polymer composition of example 10 and the homopolymer of comparative example 6 are tested in a spunbond line in the same conditions.

The trials are conducted at standard line capacity.

The non-woven fabrics thus produced have a weight of 35 $g/m^2$.

The operative conditions and the properties of the non-woven fabrics obtained in examples 11 and comparative example 7 are reported in Table 6.

Table 6

| Example | 7c | 11 |
|---|---|---|
| Operative conditions | | |
| Temperature of the polymer melted in the filter, °C | 225 | 225 |
| Air jet pressure, mbar | 800 | 800 |
| Quenching air temperature, °C | 15 | 15 |
| Output per hole, g/min | 0.5 | 0.5 |

(continued)

| Example | 7c | 11 |
|---|---|---|
| Operative conditions | | |
| Extruder pressure, bar | 80 | 80 |
| Extruder screw revolution, rpm | 40 | 40 |
| Belt speed, m/min | 45 | 45 |
| Temperature of the smooth calender, °C | 139 | 139 |
| Temperature of the embossed calender, ° C | 142 | 142 |
| Properties of the filament and of the non-woven fabric | | |
| Filament titre, dtex | 2.0 | 2.0 |
| Fabric weight, g/m$^2$ | 35 | 35 |
| MD tenacity, N/5cm | 85.1 | 93.7 |
| CD tenacity, N/5cm | 56.3 | 64.0 |
| MD elongation at break, % | 70.9 | 116.1 |
| CD elongation at break, % | 68.8 | 117 |

The polymer composition of example 10 shows good processability, high consistency and no breakages has been experienced during the test. The thus produced non-woven fabric according to the present invention shows higher elongation and tenacity than the comparative non-woven fabric.

Example 12

A polymer composition is prepared by using the same catalyst system as in example 1.

The catalyst is sent into a gas phase polymerisation apparatus comprising two interconnected cylindrical reactors, downcomer 1 and riser 2. Fast fluidisation conditions are established in reactor 1 by recycling gas from the gas-solid separator. The way to differentiate the gas composition in the two reactor legs is the "barrier" feed. This stream is propylene fed in the larger upper part of the downcomer.

The polymer composition is then extruded as in example 1 in the presence of 0.030% by weight of calcium stearate, 0.19 wt% of Irganox® B 501W and 0.0730% by weight of peroxide (i.e. Luperox 101 Akzo trademark). Irganox® B 501W is a combination of Irgafos® 168 and Irganox® 1425 WL in ratio 1:1, where Irgafos® 168 is tris(2,4-di-tert-butylphenyl)phosphite and Irganox® 1425 WL is a combination of polyethylene wax and calcium bis(((3,5-bis(1,1-dimethylethyl)-4-hydroxyphenyl)methyl)-ethylphosphonate in ratio 1:1, all marketed by Ciba® Speciality Chemicals.

The polymerisation conditions and the properties of the polymer composition before and after chemical degradation are reported in Table 7

Table 7

| | |
|---|---|
| TEAL/external donor, wt./wt | 3 |
| Temperature, ° C | 75 |
| Pressure, bar | 28 |
| $C_2^-/(C_2^-+C_3^-)$ (riser), mol/mol | 0.0428 |
| Properties of the precursor polymer composition | |
| MFR, dg/min | 1.3 |
| Ethylene content, wt% | 4.2 |
| Xylene-soluble fraction, wt % | 8.7 |
| Xylene-soluble fraction at the 25°-95° C temperature, wt% | 43.1 |

(continued)

| Properties of the precursor polymer composition | |
|---|---|
| TREF 25-95° C/Xylene soluble ratio | 4.95 |
| Polydispersity index | 3.8 |
| Melting enthalpy, J/g | 88 |
| Crystallisation temperature, ° C | 99 |
| Properties of the polymer composition after chemical degradation | |
| MFR, dg/min | 25.2 |
| Xylene-soluble fraction, wt % | 8.7 |
| Melting temperature, ° C . | 154 |
| Xylene-soluble fraction at the 25°-95° C temperature, wt% | 47.4 |
| TREF 25-95° C/Xylene soluble ratio | 5.10 |
| Polydispersity index | 2.5 |
| Notes: $C_2^-$= ethylene; $C_3^-$ = propylene; $C_2^-/(C_2^-+C_3^-)$ = monomer feed ratio. | |

Example 13

The polymer composition obtained in above example 12 is spun in a Leonard 25 spinning pilot line having length/diameter ratio of the screw of 25, screw diameter of 25 mm and compression ratio of 1:3. The line is marketed by Costruzioni Meccaniche Leonard-Sumirago (VA).

Spinning tests are carried out with the following conditions: hole diameter of 0.6 mm, output of 0.6 g/minxhole and mechanical values are measured on filaments produced at 2700 m/min winding speed, spinneret has 37 holes. The spinning is stable with no inconvenience.

Comparative example 7 (7c)

Example 13 is repeated except that the polymer is a commercial resin made up of a propylene homopolymer having an MFR value of 25 g/10 min, polydispersity index of 2.6, a melting temperature of 161° C and an amount of xylene-soluble fraction of 3.2 g/ml.

In Table 8 the properties of the filaments thus obtained are reported in comparison with the properties of the filaments made from the said commercial homopolymer.

Table 8

| Example | 13 | 7c |
|---|---|---|
| Extrusion temperature, °C | 250 | 250 |
| Filament titre, dtex | 2.3 | 2.25 |
| Tenacity, cN/tex | 26.0 | 21.1 |
| Elongation at break, % | 215 | 225 |
| Bonding force at 150° C, cN | 395 | 130 |
| Retraction, % | 7.8 | 1.5 |

It is worth noting the high tenacity of the filamentss with a good bonding force of the example 13 in comparison with the commercial product of comparison example 7. Retraction also resulted much higher. These features should improve the quality of the non-woven produced.

Example 14

Example 12 is repeated except that a polymer composition like the polymer composition of example 1 is prepared. The polymer composition is then extruded and granulated as in example 1. The polymerisation conditions and properties of the polymer composition are reported in Table 9.

Table 9

| | |
|---|---|
| Example | 14 |
| TEAL/external donor, wt./wt | 3 |
| Temperature, °C | 85 |
| Pressure, bar | 28 |
| $C_2^-/(C_2^-+C_3^-)$ (riser), mol/mol | 0.1 |
| Properties of the precursor polymer composition | |
| MFR, dg/min | 2.1 |
| Ethylene content, wt% | 1.5 |
| Xylene-soluble fraction, wt% | 2.1 |
| Xylene-soluble fraction at the 25°-95° C temperature, wt% | 29.7 |
| TREF 25°-95° C/xylene soluble ratio | 14.14 |
| Polydispersity index | 3.6 |
| Properties of the polymer composition after chemical degradation | |
| MFR, dg/min | 26.1 |
| Xylene-soluble fraction, wt % | 2.4 |
| Melting temperature, °C | 158 |
| Melting enthalpy, J/g | 86 |
| Crystallisation temperature, °C | 100 |
| Xylene-soluble fraction at the 25°-95° C temperature, wt% | 34.4 |
| TREF 25°-95° C/Xylene-soluble ratio | 14.33 |
| Polydispersity index | 2.5 |
| Notes: $C_2^-$= ethylene; $C_3^-$ = propylene; $C_2^-/(C_2^-+C_3^-)$ = monomer feed ratio. | |

The polymer composition is then spun as in example 3. The properties of the filaments thus produced are reported in Table 10.

Table 10

| | |
|---|---|
| Properties of the filaments | |
| Titre, dtex | 2.3 |
| Tenacity, cN/tex | 27.1 |
| Elongation at break, % | 165 |

Example 15

The polymer composition of the example 14 is processed in a spunbond line at full line capacity in the same conditions of the example 7. The non-woven fabrics thus produced have a weight of 15 g/m$^2$.

The main spunbond line settings and the main properties of the non-woven fabrics are summarised in Table 11

Table 11

| Example | 15 |
|---|---|
| Operative conditions of the spunbond line | |
| Temperature of the polymer melted in the filter, ° C | 225 |
| Air jet pressure, mbar | 135 |
| Output per hole, g/min | 0.6 |
| Temperature of the smooth calender, °C | 164 |
| Temperature of the embossed calender, ° C | 165 |
| Properties of the filament and of the non-woven fabric | |
| Filament titre, dtex | 2.6 |
| Fabric weight, g/m$^2$ | 15.2 |
| MD tenacity, N | 33.1 |
| CD tenacity, N | 10.5 |
| MD elongation at break, % | 45 |
| CD elongation at break, % | 65 |

The filaments processed in example 15 exhibit good processability, high consistency and no breakages. The thus produced non-woven fabric shows high softness and high tenacity.

## Claims

**1.** A fibre for spunbonded non-woven fabrics comprising a propylene polymer composition (A) having an MFR value (MFR (1)) from 6 to 150 g/10 min and being selected from:

i) a crystalline propylene random copolymer or a crystalline propylene polymer composition selected from

a) a copolymer or polymer composition containing at least 0.8% by weight of ethylene and optionally one or more $C_4$-$C_{10}$ $\alpha$-olefins and having a melting temperature of 155° C or higher, a content of fraction soluble in xylene at room temperature lower than 4% by weight and a value of the ratio of the polymer fraction collected at the temperature range from 25° to 95° C by temperature rising elution fractionation (TREF) with xylene to the xylene soluble fraction at room temperature higher than 8; and
b) a copolymer or polymer composition containing more than 2.5 wt% by weight of ethylene and optionally one or more $C_4$-$C_{10}$ $\alpha$-olefins and having a melting temperature of 153° C or higher, a content of fraction soluble in xylene at room temperature lower than 10% by weight and a value of the ratio of the polymer fraction collected at the temperature range from 25° to 95° C by TREF with xylene to the xylene soluble fraction at room temperature higher than 4; and

ii) a crystalline propylene polymer composition having a melting temperature of 153° C or higher, a content of fraction soluble in xylene at room temperature lower than 10% by weight; the said composition containing at least 0.64 wt% of ethylene and/or $C_4$-$C_{10}$ $\alpha$-olefin recurring unit and comprising (percent by weight):

I) 20-80%,of a crystalline propylene homopolymer or crystalline propylene random copolymer containing up to 1.5% by weight of ethylene and/or $C_4$-$C_{10}$ $\alpha$-olefin; and
II) 20-80% of a crystalline propylene random copolymer selected from:

IIa) a copolymer of propylene with 0.8 to 10% by weight of ethylene; provided that the difference in the ethylene content between polymer (I) and polymer (IIa) be at least 0.8 percentage unit with respect to the weight of the (co)polymer concerned;
IIb) a copolymer of propylene with 1.5 to 18% by weight of a $C_4$-$C_{10}$ $\alpha$-olefin and optionally ethylene;

provided that the difference in the comonomer content between polymer (I) and polymer (IIb) be at least 1.5 percentage units with respect to the weight of the (co)polymer concerned; and
IIc) a mixture of copolymer (IIa) and copolymer (IIb).

**2.** The fibre of claim 1 wherein composition (A) is polymer composition (ii) having a melting temperature of 155° C or higher, a content of fraction soluble in xylene at room temperature lower than 5% by weight and a value of the ratio of the polymer fraction collected at the temperature range from 25° to 95° C by fractionation with xylene to the xylene soluble fraction at room temperature higher than 8; said composition (ii) comprising (percent by weight):

I) 20-80% of a crystalline propylene homopolymer and/or crystalline propylene random copolymer containing up to 1.5% by weight of ethylene and/or $C_4$-$C_{10}$ $\alpha$-olefin; and
II) 20-80% of a crystalline random copolymer selected from:

IIa) a copolymer of propylene with 0.8 to 5% by weight of ethylene; provided that the difference in the ethylene content between polymer (I) and polymer (IIa) be at least 0.8 percentage unit with respect to the weight of the (co)polymer concerned;
IIb) a copolymer of propylene with 1.5 to 12% by weight of a $C_4$-$C_{10}$ $\alpha$-olefin and optionally ethylene; provided that the difference in the comonomer content between polymer (I) and polymer (IIb) be at least 1.5 percentage units with respect to the weight of the (co)polymer concerned; and
IIc) a mixture of copolymer (IIa) and copolymer (IIb).

**3.** The fibre of claims 1 and 2 wherein composition (A) is obtainable by subjecting to chemical degradation a precursor polymer composition (B) having an MFR value (MFR (2)) of from 0.5 to 50 g/10 min, provided that the ratio of MFR (1) to MFR (2) be from 1.5 to 60.

**4.** The fibre of claims 1 to 3 wherein the difference in the ethylene content between polymer (I) and polymer (IIa) is at least 1 percentage unit with respect to the weight of the (co)polymer concerned.

**5.** A melt spin process for the production of the fibres according to claims 1 to 4 **characterised in that** it is subjected to the process a propylene polymer composition (A) having MFR (1) values from 6 to 150 g/10 min and being selected from:

i) a crystalline propylene random copolymer or a crystalline polymer propylene polymer composition selected from:

a) a copolymer or polymer composition containing at least 0.8% by weight of ethylene and optionally one or more $C_4$-$C_{10}$ $\alpha$-olefins and having a melting temperature of 155° C or higher, a content of fraction soluble in xylene at room temperature lower than 4% by weight and a value of the ratio of the polymer fraction collected at the temperature range from 25° to 95° C by TREF with xylene to the xylene soluble fraction at room temperature higher than 8; and
b) a copolymer or polymer composition containing more than 2.5 to 4.5 wt% by weight of ethylene and optionally one or more $C_4$-$C_{10}$ $\alpha$-olefins and having a melting temperature of 153° C or higher, a content of fraction soluble in xylene at room temperature lower than 10% by weight and a value of the ratio of the polymer fraction collected at the temperature range from 25° to 95° C by TREF with xylene to the xylene soluble fraction at room temperature higher than 4; and

ii) a crystalline propylene polymer composition having a melting temperature of 153° C or higher, a content of fraction soluble in xylene at room temperature lower than 10% by weight; the said composition containing at least 0.64 wt% of ethylene and/or $C_4$-$C_{10}$ $\alpha$-olefin recurring unit and comprising (percent by weight):

I) 20-80% of a crystalline propylene homopolymer or crystalline propylene random copolymer containing up to 1.5% by weight of ethylene and/or $C_4$-$C_{10}$ $\alpha$-olefin; and
II) 20-80% of a crystalline propylene random copolymer selected from:

IIa) a copolymer of propylene with 0.8 to 10% by weight of ethylene; provided that the difference in the ethylene content between polymer (I) and polymer (IIa) be at least 0.8 percentage unit with respect to the weight of the (co)polymer concerned;
IIb) a copolymer of propylene with 1.5 to 18% by weight of a $C_4$-$C_{10}$ $\alpha$-olefin and optionally ethylene;

provided that the difference in the comonomer content between polymer (I) and polymer (IIb) be at least 1.5 percentage units with respect to the weight of the (co)polymer concerned; and
IIc) a mixture of copolymer (IIa) and copolymer (IIb).

**6.** A propylene polymer composition having MFR values from 6 to 150 g/10 min, the said composition comprising (percent by weight):

I) 20-80% of a crystalline propylene homopolymer or crystalline propylene random copolymer containing up to 1.5% by weight of ethylene and/or $C_4$-$C_{10}$ $\alpha$-olefin and having a melting temperature of 155° C or higher, a content of fraction soluble in xylene at room temperature lower than 4% by weight and a value of the ratio of the polymer fraction collected at the temperature range from 25° to 95° C by TREF with xylene to the xylene soluble fraction at room temperature higher than 8; and
II) 20-80% of a crystalline propylene random copolymer selected from:

IIa) a copolymer of propylene with 0.8 to 10% by weight of ethylene; provided that the difference in the ethylene content between polymer (I) and polymer (IIa) be at least 0.8 percentage unit with respect to the weight of the (co)polymer concerned;
IIb) a copolymer of propylene with 1.5 to 18% by weight of a $C_4$-$C_{10}$ $\alpha$-olefin and optionally ethylene; provided that the difference in the comonomer content between polymer (I) and polymer (IIb) be at least 1.5 percentage units with respect to the weight of the (co)polymer concerned; and
IIc) a mixture of copolymer (IIa) and copolymer (IIb);

said polymer composition being obtainable by way of chemical degradation of a precursor polymer composition (B) having MFR (2) values of from 0.5 to 50 g/10 min, provided that the ratio of MFR (1) to MFR (2) be from 1.5 to 60.

**7.** A crystalline propylene random copolymer or a crystalline propylene polymer composition selected from:

a) a copolymer or polymer composition containing at least 0.8% by weight of ethylene and optionally one or more $C_4$-$C_{10}$ $\alpha$-olefins and having a melting temperature of 155° C or higher, a content of fraction soluble in xylene at room temperature lower than 4% by weight and a value of the ratio of the polymer fraction collected at the temperature range from 25° to 95° C by TREF with xylene to the xylene soluble fraction at room temperature higher than 8; and
b) a copolymer or polymer composition containing more than 2.5 to 4.5 wt% by weight of ethylene and optionally one or more $C_4$-$C_{10}$ $\alpha$-olefins and having a melting temperature of 153° C or higher, a content of fraction collected at the temperature range from 25° to 95° C by TREF with xylene to the xylene soluble fraction at room temperature higher than 4;

said copolymer or composition being obtainable by way of chemical degradation of a precursor polymer composition (B) having MFR (2) values of from 0.5 to 50 g/10 min, provided that the ratio of MFR (1) to MFR (2) be from 1.5 to 60.

**8.** A process for the preparation of the polymer composition of claim 6 or 7 comprising the following stages:

1) preparing the previously said precursor composition (B) by polymerising the monomers in one or more sequential stages, operating in each stage in the presence of the polymer formed and the catalyst used in the preceding stage, and dosing the molecular weight regulator in such amounts as to obtain an MFR (2) value for the precursor composition of from 0.5 to 50 g/10 min; and
2) subjecting the precursor composition (B) obtained in stage (1) to a degradation treatment with a degradation ratio, in terms of ratio of MFR (1) to MFR (2), from 1.5 to 60.

**9.** A spunbonded non-woven fabric comprising the fibres of claim 1.

## Patentansprüche

**1.** Faser für Spinnvliesstoffe, umfassend eine Propylenpolymer-Zusammensetzung (A), die einen MFR-Wert (MFR (1)) von 6 bis 150 g/10 min aufweist und ausgewählt ist aus:

i) einer kristallinen statistischen Propylen-Copolymer- oder einer kristallinen Propylenpolymer-Zusammensetzung, die ausgewählt ist aus:

a) einer Copolymer- oder Polymer-Zusammensetzung, die mindestens 0,8 Gew.-% Ethylen und optional ein oder mehr $C_4$-$C_{10}$-α-Olefin(e) enthält und mit einer Schmelztemperatur von 155 °C oder höher, einem in Xylen bei Raumtemperatur löslichen Fraktionsgehalt von niedriger als 4 Gew.-% und einem Wert des Verhältnisses der im Temperaturbereich von 25 °C bis 95 °C mittels Temperature Rising Elution Fractionation (TREF) mit Xylen gesammelten Polymerfraktion zur in Xylen löslichen Fraktion bei Raumtemperatur von höher als 8; und

b) einer Copolymer- oder Polymer-Zusammensetzung, die mehr als 2,5 Gew.-% Ethylen und optional ein oder mehr $C_4$-$C_{10}$-α-Olefin(e) enthält und mit einer Schmelztemperatur von 153 °C oder höher, einem in Xylen bei Raumtemperatur löslichen Fraktionsgehalt von niedriger als 10 Gew.-% und einem Wert des Verhältnisses der in einem Temperaturbereich von 25 °C bis 95 °C mittels TREF mit Xylen gesammelten Polymerfraktion zur in Xylen löslichen Fraktion bei Raumtemperatur von höher als 4; und

ii) einer kristallinen Propylenpolymer-Zusammensetzung mit einer Schmelztemperatur von 153 °C oder höher, einem in Xylen bei Raumtemperatur löslichen Fraktionsgehalt von niedriger als 10 Gew.-%, wobei die Zusammensetzung mindestens 0,64 Gew.-% Ethylen und/oder eine $C_4$-$C_{10}$-α-Olefin-Wiederholungseinheit enthält und (in Gewichtsprozent) Folgendes umfasst:

I) 20-80 % eines kristallinen Propylen-Homopolymers oder eines kristallinen statistischen Propylen-Copolymers, das bis zu 1,5 Gew.-% Ethylen und/oder $C_4$-$C_{10}$-α-Olefin enthält; und

II) 20-80 % eines kristallinen statistischen Propylen-Copolymers, das ausgewählt ist aus:

IIa) einem Copolymer von Propylen mit 0,8 bis 10 Gew.-% Ethylen; vorausgesetzt, dass der Unterschied des Ethylengehalts zwischen Polymer (I) und Polymer (IIa) mindestens 0,8 Prozenteinheiten bezogen auf das Gewicht des betreffenden (Co)polymers beträgt;

IIb) einem Copolymer von Propylen mit 1,5 bis 18 Gew.-% eines $C_4$-$C_{10}$-α-Olefins und optional Ethylen; vorausgesetzt, dass der Unterschied des Comonomer-Gehalts zwischen Polymer (I) und Polymer (IIb) mindestens 1,5 Prozenteinheiten bezogen auf das Gewicht des betreffenden (Co)polymers beträgt; und

IIc) einem Gemisch aus Copolymer (IIa) und Copolymer (IIb).

**2.** Faser nach Anspruch 1, worin die Zusammensetzung (A) Folgendes darstellt: eine Polymer-Zusammensetzung (ii) mit einer Schmelztemperatur von 155 °C oder höher, einen in Xylen bei Raumtemperatur löslichen Fraktionsgehalt von niedriger als 5 Gew.-% und einen Wert des Verhältnisses der in einem Temperaturbereich von 25 °C bis 95 °C durch Fraktionierung mit Xylen gesammelten Polymerfraktion zur in Xylen löslichen Fraktion bei Raumtemperatur von höher als 8; wobei die Zusammensetzung (ii) (in Gewichtsprozent) Folgendes umfasst:

I) 20-80 % eines kristallinen Propylen-Homopolymers und/oder eines kristallinen statistischen Propylen-Copolymers, enthaltend bis zu 1,5 Gew.-% Ethylen und/oder $C_4$-$C_{10}$-α-Olefin; und

II) 20-80 % eines kristallinen statistischen Copolymers, das ausgewählt ist aus:

IIa) einem Copolymer von Propylen mit 0,8 bis 5 Gew.-% Ethylen; vorausgesetzt, dass der Unterschied des Ethylengehalts zwischen Polymer (I) und Polymer (IIa) mindestens 0,8 Prozenteinheiten bezogen auf das Gewicht des betreffenden (Co)polymers beträgt;

IIb) einem Copolymer von Propylen mit 1,5 bis 12 Gew.-% eines $C_4$-$C_{10}$-α-Olefins und optional Ethylen; vorausgesetzt, dass der Unterschied des Comonomer-Gehalts zwischen Polymer (I) und Polymer (IIb) mindestens 1,5 Prozenteinheiten bezogen auf das Gewicht des betreffenden (Co)polymers beträgt; und

IIc) einem Gemisch von Copolymer (IIa) und Copolymer (IIb).

**3.** Faser nach Anspruch 1 und 2, worin die Zusammensetzung (A) durch Aussetzen einer Präkursor-Polymer-Zusammensetzung (B) mit einem MFR-Wert (MFR (2)) von 0,5 bis 50 g/10 min gegenüber dem chemischen Abbau erhältlich ist, vorausgesetzt, dass das Verhältnis von MFR (1) zu MFR (2) von 1,5 bis 60 beträgt.

**4.** Faser nach den Ansprüchen 1 bis 3, worin der Unterschied des Ethylengehalts zwischen Polymer (I) und Polymer (IIa) mindestens 1 Prozenteinheit bezogen auf das Gewicht des betreffenden (Co)polymers beträgt.

**5.** Schmelzspinnverfahren zur Herstellung der Fasern nach den Ansprüchen 1 bis 4, **dadurch gekennzeichnet, dass** Folgendes dem Verfahren ausgesetzt wird: eine Propylenpolymer-Zusammensetzung (A), die MFR-(1)-Werte von

6 bis 150 g/10 min aufweist und ausgewählt ist aus:

i) einer kristallinen statistischen Propylen-Copolymer- oder einer kristallinen Polymerpropylen-Polymer-Zusammensetzung, die ausgewählt ist aus:

a) einer Copolymer- oder Polymer-Zusammensetzung, die mindestens 0,8 Gew.-% Ethylen und optional ein oder mehr $C_4$-$C_{10}$-$\alpha$-Olefin(e) enthält und mit einer Schmelztemperatur von 155 °C oder höher, einem in Xylen bei Raumtemperatur löslichen Fraktionsgehalt von niedriger als 4 Gew.-% und einem Wert des Verhältnisses der im Temperaturbereich von 25 °C bis 95 °C mittels TREF mit Xylen gesammelten Polymerfraktion zur in Xylen löslichen Fraktion bei Raumtemperatur von höher als 8; und
b) einer Copolymer- oder Polymer-Zusammensetzung, die mehr als 2,5 bis 4,5 Gew.-% Ethylen und optional ein oder mehr $C_4$-$C_{10}$-$\alpha$-Olefin(e) enthält und mit einer Schmelztemperatur von 153 °C oder höher, einem in Xylen bei Raumtemperatur löslichen Fraktionsgehalt von niedriger als 10 Gew.-% und einem Wert des Verhältnisses der im Temperaturbereich von 25 °C bis 95 °C mittels TREF mit Xylen bei Raumtemperatur gesammelten Polymerfraktion zur in Xylen löslichen Fraktion von höher als 4; und

ii) einer kristallinen Propylenpolymer-Zusammensetzung mit einer Schmelztemperatur von 153 °C oder höher, einem in Xylen bei Raumtemperatur löslichen Fraktionsgehalt von niedriger als 10 Gew.-%; wobei die Zusammensetzung mindestens von 0,64 Gew.-% Ethylen und/oder eine $C_4$-$C_{10}$-$\alpha$-Olefin-Wiederholungseinheit enthält und (in Gewichtsprozent) Folgendes umfasst:

I) 20-80 % eines kristallinen Propylen-Homopolymers oder eines kristallinen statistischen Propylen-Copolymers, das bis zu 1,5 Gew.-% Ethylen und/oder $C_4$-$C_{10}$-$\alpha$-Olefin enthält; und
II) 20-80 % eines kristallinen statistischen Propylen-Copolymers, das ausgewählt ist aus:

IIa) einem Copolymer von Propylen mit 0,8 bis 10 Gew.-% Ethylen; vorausgesetzt, dass der Unterschied des Ethylengehalts zwischen Polymer (I) und Polymer (IIa) mindestens 0,8 Prozenteinheiten bezogen auf das Gewicht des betreffenden (Co)polymers beträgt;
IIb) einem Copolymer von Propylen mit 1,5 bis 18 Gew.-% eines $C_4$-$C_{10}$-$\alpha$-Olefins und optional Ethylen; vorausgesetzt, dass der Unterschied des Comonomer-Gehalts zwischen Polymer (I) und Polymer (IIb) mindestens 1,5 Prozenteinheiten bezogen auf das Gewicht des betreffenden (Co)polymers beträgt; und
IIc) einem Gemisch aus Copolymer (IIa) und Copolymer (IIb).

**6.** Propylenpolymer-Zusammensetzung mit MFR-Werten von 6 bis 150 g/10 min, wobei die Zusammensetzung (in Gewichtsprozent) Folgendes umfasst:

I) 20-80 % eines kristallinen Propylen-Homopolymers oder eines kristallinen statistischen Propylen-Copolymers, enthaltend bis zu 1,5 Gew.-% Ethylen und/oder $C_4$-$C_{10}$-$\alpha$-Olefin und mit einer Schmelztemperatur von 155 °C oder höher, ein in Xylen bei Raumtemperatur löslicher Fraktionsgehalt von niedriger als 4 Gew.-% und einem Wert des Verhältnisses der im Temperaturbereich von 25 °C bis 95 °C mittels TREF mit Xylen gesammelten Polymerfraktion zur in Xylen löslichen Fraktion bei Raumtemperatur von höher als 8; und
II) 20-80% eines kristallinen statistischen Propylen-Copolymers, das ausgewählt ist aus:

IIa) einem Copolymer von Propylen mit 0,8 bis 10 Gew.-% Ethylen; vorausgesetzt, dass der Unterschied des Ethylengehalts zwischen Polymer (I) und Polymer (IIa) mindestens 0,8 Prozenteinheiten bezogen auf das Gewicht des betreffenden (Co)polymers beträgt;
IIb) einem Copolymer von Propylen mit 1,5 bis 18 Gew.-% eines $C_4$-$C_{10}$-$\alpha$-Olefins und optional Ethylen; vorausgesetzt, dass der Unterschied des Comonomer-Gehalts zwischen Polymer (I) und Polymer (IIb) mindestens 1,5 Prozenteinheiten bezogen auf das Gewicht des betreffenden (Co)polymers beträgt; und
IIc) einem Gemisch aus Copolymer (IIa) und Copolymer (IIb);

wobei die Polymer-Zusammensetzung über den chemischen Abbau einer Präkursor-Polymer-Zusammensetzung (B) mit MFR-Werten (2) von 0,5 bis 50 g/10 min erhältlich ist, vorausgesetzt, dass das Verhältnis von MFR (1) zu MFR (2) von 1,5 bis 60 beträgt.

**7.** Kristalline statistische Propylen-Copolymer- oder kristalline Propylenpolymer-Zusammensetzung, die ausgewählt ist aus:

a) einer Copolymer- oder Polymer-Zusammensetzung, die mindestens 0,8 Gew.-% Ethylen und optional ein oder mehr $C_4$-$C_{10}$-$\alpha$-Olefin(e) enthält und mit einer Schmelztemperatur von 155 °C oder höher, einem in Xylen bei Raumtemperatur löslichen Fraktionsgehalt von niedriger als 4 Gew.-% und einem Wert des Verhältnisses der im Temperaturbereich von 25 °C bis 95 °C mittels TREF mit Xylen gesammelten Polymerfraktion zur in Xylen löslichen Fraktion bei Raumtemperatur von höher als 8; und
b) einer Copolymer- oder Polymer-Zusammensetzung, die mehr als 2,5 bis 4,5 Gew.-% Ethylen und optional ein oder mehr $C_4$-$C_{10}$-$\alpha$-Olefin(e) enthält und mit einer Schmelztemperatur von 153 °C oder höher, mit einem im Temperaturbereich von 25 °C bis 95 °C mittels TREF mit Xylen gesammelten Fraktionsgehalt zur in Xylen löslichen Fraktion bei Raumtemperatur von höher als 4;

wobei das Copolymer oder die Zusammensetzung über den chemischen Abbau einer Präkursor-Polymer-Zusammensetzung (B) mit MFR-Werten (2) von 0,5 bis 50 g/10 min erhältlich ist, vorausgesetzt, dass das Verhältnis von MFR (1) zu MFR (2) von 1,5 bis 60 beträgt.

**8.** Verfahren zur Herstellung der Polymer-Zusammensetzung nach Anspruch 6 oder 7, das die folgenden Stufen umfasst:

1) Herstellen der zuvor genannten Präkursor-Zusammensetzung (B) durch Polymerisieren der Monomere in einer oder mehr sequenziellen Stufe(n), wobei jede Stufe in der Gegenwart des gebildeten Polymers und des in der vorausgegangenen Stufe verwendeten Katalysators betrieben wird, und Dosieren des Molekulargewichtsregulators in solchen Mengen, um einen MFR-Wert (2) für die Präkursor-Zusammensetzung von 0,5 bis 50 g/10 min zu erhalten; und
2) Aussetzen der auf Stufe (1) erhaltenen Präkursor-Zusammensetzung (B) einer Abbaubehandlung mit einem Abbauverhältnis bezogen auf das Verhältnis von MFR (1) zu MFR (2) von 1,5 bis 60.

**9.** Spinnvliesstoffe, umfassend die Fasern nach Anspruch 1.

**Revendications**

**1.** Fibre pour des textiles non-tissés filés-liés par extrusion comprenant une composition d'un polymère de propylène (A) présentant une valeur MFR (MFR (1)) de 6 à 150 g/10 min et étant choisie parmi :

i) une composition d'un copolymère cristallin aléatoire de propylène ou d'un polymère cristallin de propylène, choisie parmi

a) une composition d'un copolymère ou d'un polymère contenant au moins 0,8% en poids d'éthylène et éventuellement une ou plusieurs $\alpha$-oléfines en $C_4$-$C_{10}$ et présentant une température de fusion de 155°C ou plus, une teneur en fraction soluble dans du xylène à température ambiante inférieure à 4% en poids et une valeur du rapport de la fraction polymère récupérée dans la plage de température de 25°C à 95°C par un fractionnement par élution en augmentant la température (TREF) avec du xylène à la fraction soluble dans du xylène à température ambiante supérieur à 8 ; et
b) une composition d'un copolymère ou d'un polymère contenant plus de 2,5% en poids d'éthylène et éventuellement une ou plusieurs $\alpha$-oléfines en $C_4$-$C_{10}$ et présentant une température de fusion de 153°C ou plus, une teneur en fraction soluble dans du xylène à température ambiante inférieure à 10% en poids et une valeur du rapport de la fraction polymère récupérée dans la plage de température de 25°C à 95°C par TREF avec du xylène à la fraction soluble dans du xylène à température ambiante supérieur à 4 ; et

ii) une composition d'un polymère cristallin de propylène présentant une température de fusion de 153°C ou plus, une teneur en fraction soluble dans du xylène à température ambiante inférieure à 10% en poids ; ladite composition contenant au moins 0,64% en poids d'unité récurrente d'éthylène et/ou d'$\alpha$-oléfine en $C_4$-$C_{10}$ et comprenant (pourcentage en poids) :

I) 20-80% d'un homopolymère cristallin de propylène ou d'un copolymère cristallin aléatoire de propylène contenant jusqu'à 1,5% en poids d'éthylène et/ou d'$\alpha$-oléfine en $C_4$-$C_{10}$; et
II) 20-80% d'un copolymère cristallin aléatoire de propylène choisi parmi :

IIa) un copolymère de propylène avec 0,8 à 10% en poids d'éthylène ; à condition que la différence en

teneur en éthylène entre le polymère (I) et le polymère (IIa) soit d'au moins 0,8 d'unité de % par rapport au poids du (co)polymère en question ;
IIb) un copolymère de propylène avec 1,5 à 18% en poids d'une α-oléfine en $C_4$-$C_{10}$ et éventuellement d''éthylène ; à condition que la différence en teneur en comonomère entre le polymère (I) et le polymère (IIb) soit d'au moins 1,5 d'unité de % par rapport au poids du (co)polymère en question ; et
IIc) un mélange de copolymère (IIa) et de copolymère (IIb).

**2.** Fibre selon la revendication 1, où la composition (A) est une composition d'un polymère (ii) présentant une température de fusion de 155°C ou plus, une teneur en fraction soluble dans du xylène à température ambiante inférieure à 5% en poids et une valeur du rapport de la fraction polymère récupérée dans la plage de température de 25°C à 95°C par un fractionnement avec du xylène à la fraction soluble dans du xylène à température ambiante supérieur à 8 ; ladite composition (ii) comprenant (pourcentage en poids) :

I) 20-80% d'un homopolymère cristallin de propylène et/ou d'un copolymère cristallin aléatoire de propylène contenant jusqu'à 1,5% en poids d'éthylène et/ou d'α-oléfine en $C_4$-$C_{10}$; et
II) 20-80% d'un copolymère cristallin aléatoire choisi parmi :

IIa) un copolymère de propylène avec 0,8 à 5% en poids d'éthylène ; à condition que la différence en teneur en éthylène entre le polymère (I) et le polymère (IIa) soit d'au moins 0,8 d'unité de % par rapport au poids du (co)polymère en question ;
IIb) un copolymère de propylène avec 1,5 à 12% en poids d'une α-oléfine en $C_4$-$C_{10}$ et éventuellement d'éthylène ; à condition que la différence en teneur en comonomère entre le polymère (I) et le polymère (IIb) soit d'au moins 1,5 d'unité de % par rapport au poids du (co)polymère en question ; et
IIc) un mélange de copolymère (IIa) et de copolymère (IIb).

**3.** Fibre selon les revendications 1 et 2 où la composition (A) peut être obtenue en soumettant à une dégradation chimique une composition d'un polymère précurseur (B) présentant une valeur MFR (MFR (2)) de 0,5 à 50 g/10 min, à condition que le rapport de MFR (1) à MFR (2) soit de 1,5 à 60.

**4.** Fibre selon les revendications 1 à 3, où la différence en teneur en éthylène entre le polymère (I) et le polymère (IIa) est d'au moins 1 unité de % par rapport au poids du (co)polymère en question.

**5.** Procédé de filage en masse fondue pour la production de fibres selon les revendications 1 à 4, **caractérisé en ce qu'**on fait procédér une composition d'un polymère de propylène (A) présentant des valeurs MFR (1) de 6 à 150 g/10 min et étant choisie parmi :

i) une composition d'un copolymère cristallin aléatoire de propylène ou d'un polymère cristallin de propylène, choisie parmi :

a) une composition d'un copolymère ou d'un polymère contenant au moins 0,8% en poids d'éthylène et éventuellement une ou plusieurs α-oléfines en $C_4$-$C_{10}$ et présentant une température de fusion de 155°C ou plus, une teneur en fraction soluble dans du xylène à température ambiante inférieure à 4% en poids et une valeur du rapport de la fraction polymère récupérée dans la plage de température de 25°C à 95°C par TREF avec du xylène à la fraction soluble dans du xylène à température ambiante supérieur à 8 ; et
b) une composition d'un copolymère ou d'un polymère contenant plus de 2,5 à 4,5% en poids d'éthylène et éventuellement une ou plusieurs α-oléfines en $C_4$-$C_{10}$ et présentant une température de fusion de 153°C ou plus, une teneur en fraction soluble dans du xylène à température ambiante inférieure à 10% en poids et une valeur du rapport de la fraction polymère récupérée dans la plage de température de 25°C à 95°C par TREF avec du xylène à la fraction soluble dans du xylène à température ambiante supérieur à 4 ; et

ii) une composition d'un polymère cristallin de propylène présentant une température de fusion de 153°C ou plus, une teneur en fraction soluble dans du xylène à température ambiante inférieure à 10% en poids; ladite composition contenant au moins 0,64% en poids d'unité récurrente d'éthylène et/ou d'α-oléfine en $C_4$-$C_{10}$ et comprenant (pourcentage en poids) :

I) 20-80% d'un homopolymère cristallin de propylène ou d'un copolymère cristallin aléatoire de propylène contenant jusqu'à 1,5% en poids d'éthylène et/ou d'α-oléfine en $C_4$-$C_{10}$; et
II) 20-80% d'un copolymère cristallin aléatoire de propylène choisi parmi :

IIa) un copolymère de propylène avec 0,8 à 10% en poids d'éthylène ; à condition que la différence en teneur en éthylène entre le polymère (I) et le polymère (IIa) soit d'au moins 0,8 d'unité de % par rapport au poids du (co)polymère en question ;
IIb) un copolymère de propylène avec 1,5 à 18% en poids d'une α-oléfine en $C_4$-$C_{10}$ et éventuellement d"éthylène ; à condition que la différence en teneur en comonomère entre le polymère (I) et le polymère (IIb) soit d'au moins 1,5 d'unité de % par rapport au poids du (co)polymère en question ; et
IIc) un mélange de copolymère (IIa) et de copolymère (IIb).

**6.** Composition d'un polymère de propylène présentant des valeurs MFR de 6 à 150 g/10 min, ladite composition comprenant (pourcentage en poids):

I) 20-80% d'un homopolymère cristallin de propylène ou d'un copolymère cristallin aléatoire de propylène contenant jusqu'à 1,5% en poids d'éthylène et/ou une α-oléfine en $C_4$-$C_{10}$ et présentant une température de fusion de 155°C ou plus, une teneur en fraction soluble dans du xylène à température ambiante inférieure à 4% en poids et une valeur du rapport de la fraction polymère récupérée dans la plage de température de 25°C à 95°C par TREF avec du xylène à la fraction soluble dans du xylène à température ambiante supérieur à 8 ; et
II) 20-80% d'un copolymère cristallin aléatoire de propylène choisi parmi :

IIa) un copolymère de propylène avec 0,8 à 10% en poids d'éthylène ; à condition que la différence en teneur en éthylène entre le polymère (I) et le polymère (IIa) soit d'au moins 0,8 d'unité de % par rapport au poids du (co)polymère en question ;
IIb) un copolymère de propylène avec 1,5 à 18% en poids d'une α-oléfine en $C_4$-$C_{10}$ et éventuellement d"éthylène ; à condition que la différence en teneur en comonomère entre le polymère (I) et le polymère (IIb) soit d'au moins 1,5 d'unité de % par rapport au poids du (co)polymère en question ; et
IIc) un mélange de copolymère (IIa) et de copolymère (IIb) :

ladite composition d'un polymère pouvant être obtenue par une dégradation chimique d'une une composition d'un polymère précurseur (B) présentant des valeurs MFR (2) de 0,5 à 50 g/10 min, à condition que le rapport de MFR (1) à MFR (2) soit de 1,5 à 60.

**7.** Composition d'un copolymère cristallin aléatoire de propylène ou d'un polymère cristallin de propylène, choisie parmi :

a) une composition d'un copolymère ou d'un polymère contenant au moins 0,8% en poids d'éthylène et éventuellement une ou plusieurs α-oléfines en $C_4$-$C_{10}$ et présentant une température de fusion de 155°C ou plus, une teneur en fraction soluble dans du xylène à température ambiante inférieure à 4% en poids et une valeur du rapport de la fraction polymère récupérée dans la plage de température de 25°C à 95°C par TREF avec du xylène à la fraction soluble dans du xylène à température ambiante supérieur à 8 ; et
b) une composition d'un copolymère ou d'un polymère contenant plus de 2,5 à 4,5% en poids d'éthylène et éventuellement une ou plusieurs α-oléfines en $C_4$-$C_{10}$ et présentant une température de fusion de 153°C ou plus, une teneur en fraction récupérée dans la plage de température de 25°C à 95°C par TREF avec du xylène à la fraction soluble dans du xylène à température ambiante supérieure à 4 ;

ledit copolymère ou ladite composition d'un polymère pouvant être obtenu(e) par une dégradation chimique d'une composition d'un polymère précurseur (B) présentant des valeurs MFR (2) de 0,5 à 50 g/10 min, à condition que le rapport de MFR (1) à MFR (2) soit de 1,5 à 60.

**8.** Procédé pour la préparation de la composition d'un polymère selon la revendication 6 ou 7, comprenant les étapes suivantes :

1) préparation de ladite composition d'un précurseur ci-dessus (B) en polymérisant les monomères en une ou plusieurs étapes séquentielles, en travaillant dans chaque étape en présence du polymère formé et du catalyseur utilisé dans l'étape précédente et en dosant le régulateur de poids moléculaire en des quantités telles qu'on obtient une valeur MFR (2) pour la composition d'un précurseur de 0,5 à 50 g/10 min ; et
2) soumission de la composition d'un précurseur (B) obtenue dans l'étape (1) à un traitement de dégradation avec un rapport de dégradation, en termes de rapport de MFR (1) à MFR (2), de 1,5 à 60.

**9.** Tissu non tissé filé-lié comprenant les fibres de la revendication 1.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 416620 A
- US 4211819 A
- US 4399054 A
- EP 45977 A
- US 4472524 A
- EP 361493 A
- EP 728769 A
- WO 0002929 A